**Europäisches Patentamt**

**European Patent Office**

**Office européen des brevets**

(11) Veröffentlichungsnummer: **0 036 628**
**A1**

# EUROPÄISCHE PATENTANMELDUNG

(21) Anmeldenummer: **81102014.8**

(51) Int. Cl.³: **A 01 K 1/03**

(22) Anmeldetag: **18.03.81**

(30) Priorität: **20.03.80 DK 1218/80**

(43) Veröffentlichungstag der Anmeldung: **30.09.81**
**Patentblatt 81/39**

(84) Benannte Vertragsstaaten: **AT BE CH DE FR GB IT LI LU NL SE**

(71) Anmelder: **SCANBUR A p S, Gl. Lellingegärd Bakkeleddet 9, Lellinge DK-4600 Köge (DK)**

(72) Erfinder: **Hansen, Jet Thurmann, Gl. Lellingegärd Bakkeleddet 9, Lellinge DK-4600 Koge (DK)**
Erfinder: **Pedersen, Niels Erling, Roskildevej 218, DK-4100 Ringstead (DK)**

(74) Vertreter: **Patentanwälte Leinweber & Zimmermann, Rosental 7/II Aufg., D-8000 München2 (DE)**

(54) **Anordnungen zur Isolierung des Inneren von Käfigen für kleine Versuchstiere von der Umwelt.**

(57) Ein Deckel für Käfigkasten für kleine Versuchstiere besteht aus einem unteren kragenartigen Teil (8), der in solcher Weise ausgebildet ist, dass er um einen Käfigkasten (1) angeordnet nach oben zur satten Anlage an der Aussenseite des Käfigkastens geführt werden kann, und einen nach oben gerichteten ringförmigen Flansch (12) aufweist, sowie aus einem oberen haubenförmigen Teil (9) mit einer durch eine Platte (15) aus einem luftfiltrierenden Material abgedeckten Öffnung. Der Teil (9) weist einen nach unten gerichteten ringförmigen Flansch (13) auf, der zum Eingriff mit dem nach oben gerichteten ringförmigen Flansch (12) des kragenartigen Teils (8) gebracht werden kann.

Der Deckel kann für Käfigkasten mit etwas variierenden äusseren Abmessungen und mit unterschiedlichen Deckelkonstruktionen verwendet werden.

Die Erfindung betrifft Anordnungen zur Isolierung des Inneren von Käfigen für kleine Versuchstiere wie Mäuse, Ratten und Meerschweinchen von der Umwelt, wobei die Käfige jeweils einen oben offenen Kasten z.B. aus durchsichtigem Kunststoff und einen Deckel umfassen.

In Fällen, in denen mit von der Umwelt mikrobiologisch isoliert zu haltenden Versuchstieren gearbeitet wird, hat man bisher laminare Ströme steriler Luft über eine Anzahl in einem Regal aufgehängter Käfige hinweggeführt und/oder die Abluft gesammelt und vor ihrer Ableitung ins Freie durch Filteranordnungen geführt. Bei dieser Art von mikrobiologischer Isolation ist ein grosser Ausrüstungsaufwand erforderlich, und die Aufrechterhaltung gleichbleibender mikrobiologischen Bedingungen in den einzelnen Käfigen ist mit Schwierigkeiten verbunden.

Es sind ausserdem kuvösenartige Isolationsbehältnisse für Versuchskäfige bekannt, wobei für jedes Isolationsbehältnis Zuführungsleitungen für eine getrennte Zufuhr von steriler Luft und Austrittsleitungen mit zugehörigen Filtern zum getrennten Filtrieren der Abluft aus jedem Isolationsbehältnis vorgesehen sind. Da bei der Verwendung derartiger Isolationsbehältnisse die Arbeit mit den Versuchstieren sehr umständlich und zeitaufwendig wird, sind sie für die normale Arbeit mit Versuchstieren ungeeignet.

Bei den Bestrebungen einfache Anordnungen für eine individuelle Isolation des Inneren derartiger Versuchskäfige von der Umwelt zu schaffen, bestand das Problem, dass die handelsüblichen Käfige einer gegebenen Grösse vom einen Fabrikat zum anderen unterschiedliche Abmessungen aufweisen, so dass Isolationsanordnungen, die sich für ein Käfig des einen Fabrikates eignet, den Käfig einen anderen Fabrikates nicht hinreichend dicht umschliesst.

Der Erfindung liegt die Aufgabe zugrunde, einfache Isolationsanordnungen der vorstehend erwähnten Art zu schaffen, die sich für verschiedene Fabrikate von Käfigen gleicher Grösse mit unterschiedlichen Deckelkonstruktionen eignet, und einen für die Versuchstiere hinreichenden Luftaustausch gestattet.

Diese Aufgabe wird erfindungsgemäss durch Isolationsanordnungen gelöst, die dadurch gekennzeichnet sind, dass sie aus einem unteren kragenartigen Teil, der in solcher Weise ausgebildet ist, dass er um einen Käfigkasten nach oben zur satten Anlage an der

2 0036628

Aussenseite des Käfigkastens in einem Bereich nahe dem oberen Kastenrand geführt werden kann und einen nach oben gerichteten Ringflansch aufweist, sowie aus einem oberen haubenförmigen Teil bestehen, der mindestens eine durch eine Platte aus luftfiltrierendem Material abgedeckte Öffnung und einen nach unten gerichteten Flansch aufwweist, der zum Eingriff mit dem nach oben gerichteten Ringflansch des kragenartigen Teils gebracht werden kann, wenn dieser satt anliegend an einem Käfigkasten angeordnet ist.

Die meisten der handelsüblichen Käfigkasten aus Kunststoff weisen Seiten- und Stirnwände auf, die vom Kastenboden zum oberen Rand des Kastens hin schwach nach aussen geneigt sind.

Das bedeutet, dass durch die Verwendung eines kragenartigen Teils mit einem verhältnismässig hohen Ringflansch und/oder eines haubenförmigen Teils mit einem verhältnismässig hohen nach unten gerichteten Ringflansch sichergestellt werden kann, dass die beiden Flansche, auch wenn die beiden Teile für Käfigkasten mit etwas unterschiedlichen äusseren Abmessungen verwendet werden, zum Eingriff miteinander gebracht werden können.

In Fällen, in denen eine besonders wirksame mikrobiologische Isolation von Versuchstieren von der Umwelt benötigt wird, kann ein Klebstreifen vorgesehen werden, der längs des gesamten Umkreises des Käfiges einen Teil des nach oben gerichteten Flansches des Kragens und einen Teil des nach unten gerichteten Flansches der Haube überlappt.

Der kragenartige Teil kann zum Beispiel aus einem dünnen biegsamen Kunststoffmaterial wie Polystyrol bestehen. Ein derartiger kragenartiger Teil wird vorzugsweise als Einmalartikel verwendet.

Es kann jedoch auch ein verhältnismässig steifer kragenartiger Teil z.B. aus Polypropylen, Polykarbonat oder Metall verwendet werden, wobei in solchen Fällen vorzugsweise ein an der Innenseite des Kragens angeordneter Dichtring vorgesehen wird.

Ein solcher verhältnismässig steif ausgebildeter kragenartiger Teil wird bevorzugt, wenn er wiederholt verwendbar sein soll, und der Dichtring sollte dann wie der kragenartige Teil autoklavierbar sein.

Alternativ kann auf die Innenseite des kragenartigen Teils ein Klebstoff aufgetragen sein, so dass zwischen dem kragenartigen Teil und dem Käfigkasten eine Klebeverbindung entsteht.

Bei der Verwendung von Käfigen, die zum Einhängen in ein Regal vorgesehen sind, und deshalb mit Tragschienen an den Aussenseiten der Seitenwänden ausgebildet sind, ist der kragenartige Teil vorzugsweise von solchen Abmessungen, dass er dicht an den Tragschienen zum Liegen kommt. Beim Aufhängen im Regal an passenden Regalflanschen werden die Käfige vorzugsweise so angeordnet, dass sie mit dem kragenartigen Teil zum Aufliegen auf die Regalflanschen kommen.

Der haubenförmige Teil kann ebenfalls aus einem verhältnismässig dünnem Material, z.B. Polyvinylchlorid oder Polystyrol, bestehen, wenn er zur einmalige Verwendung vorgesehen ist. Eine solche Haube kann unter Verwendung des Vakuum-Formverfahrens oder des Spritzgussverfahrens hergestellt werden.

Die Haube kann jedoch auch aus einem relativ dicken und steifen Material, z.B. polykarbonat oder Polypropylen, bestehen, und kann als Spritzgussteil hergestellt sein.

Um die Aufsicht über die Tiere in den Versuchskäfigen zu erleichtern, ist die Haube vorzugsweise durchsichtig. Der haubenförmige Teil hat vorzugsweise eine im wesentlichen ebene Oberfläche, was das Stapeln von nicht in Gebrauch genommenen Käfigen erleichtert, und die Öffnung ist vorzugsweise in diesem ebenen Bereich angeordnet. Die Öffnung ist wie bereits erwähnt durch eine Platte aus luftfiltrierendem Material, z.B. eine Polyesterfilterplatte, abgedeckt. Durch passende Wahl der Dichte und der Dicke dieser Platte lässt sich eine fast vollständige Abscheidung von Mikroorganismen erzielen, gleichzeitig damit dass ein hinreichend grosser Luftaustausch erreicht wird.

Um in Verbindung mit einem effektiven Filtrieren der Luft einen hinreichend grossen Luftaustausch zu erzielen, sind vorzugsweise mehrere Öffnungen im haubenförmigen Teil ausgebildet, und jede von diesen Öffnungen ist durch eine Platte aus luftfiltrierendem Material abgedeckt.

Wenn die Öffnung sich über einen grossen Teil der Oberfläche der Haube erstreckt, ist es zweckmässig, Stützstege in der Öffnung vorzusehen, um zu vermeiden, dass die luftfiltrierende Platte durch Druck beschädigt oder gelöst wird.

Bei den handelsüblichen Käfigen der vorstehend erwähnten Art besteht der Deckel gewöhnlich aus einer Anzahl parallel zueinander angeordnet Drähte aus rostfreiem Stahl, die mit einigen querlaufenden, ebenfalls aus rostfreiem Stahl bestehenden Drähten grösserer Dicke verbunden sind. Am einen Ende weist der Deckel eine Vertiefung mit Raum für einen Wasserbehälter und Festfutter auf.

Die bekannten Deckel sind derart ausgebildet, dass durch nach unten gebogene Teile an den Enden des Deckels eine Verriegelung zwischen dem oberen Rand des Käfigkastens und dem Deckel erzielt werden kann. Um Raum für die über den Rand des Käfigkastens hinausragenden Teile des Deckels zu schaffen, ist zwischen dem zum satten Anliegen gegen den Käfigkasten bestimmten kragenartigen Teil und dem unteren Rand des nach oben gerichteten Ringflansches vorzugsweise ein plattenförmiger Steg vorgesehen. Dadurch erhält der nach oben gerichtete Flansch einen gewissen Abstand vom oberen Rand des Käfigkastens, wenn der kragenartige Teil an dem Käfigkasten angeordnet ist.

In der Oberseite des haubenförmigen Teils können kreisrunde Vertiefungen mit einem Boden ausgebildet sein, der sich relativ leicht durchbrechen lässt. Diese Vertiefungen können in dem Falle verwendet werden, dass man für Versuche kürzerer Dauer wünscht, Wasserflaschen auf dem haubenförmigen Teil anzuordnen, oder Rohre für die Zufuhr von steriler Luft durch den Deckel zu führen, um einen besonders effektiven Luftaustausch zu erzielen. Bei der Verwendung eines relativ dünnen biegsamen Materials wird sich das Material beim Durchbrechen des Bodens der Vertiefungen mit einem Rohr von passenden Abmessungen eng an der Aussenseite des Rohres schmiegen, wodurch die schützende Wirkung der Haube aufrechterhalten wird.

In weiterer Ausgestaltung der Erfindung bildet der kragenartige Teil einen integrierenden Teil des Käfigkastens. Ein solcher Käfigkasten mit einem zugehörigen kragenartigen Teil kann z.B. im Spritzgussverfahren hergestellt sein, und besteht zweckmässig aus Polykarbonat. Ein solcher Käfigkasten braucht nicht mit Tragschienen zum Aufhängen der Käfige in Regalen ausgebildet zu werden, da in diesem Falle die Unterseite des integrierenden kragenartigen Teils als Tragschiene dient.

Die Erfindung wird im folgenden anhand der Zeichnung näher erläutert. Es zeigt:

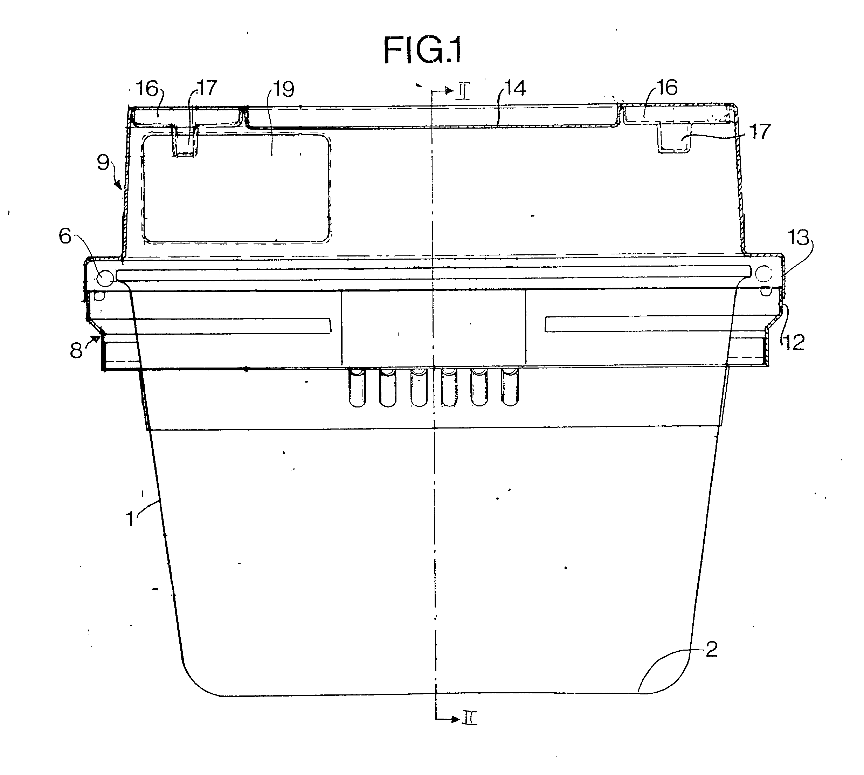

Fig. 1　　eine Stirnansicht eines Käfiges mit Isolationsan-

5    0036628

ordnungen nach der Erfindung teilweise im Schnitt,

Fig. 2    einen Schnitt nach der Linie II-II in Fig. 1 durch den Käfig mit Isolationsanordnungen nach Fig. 1,

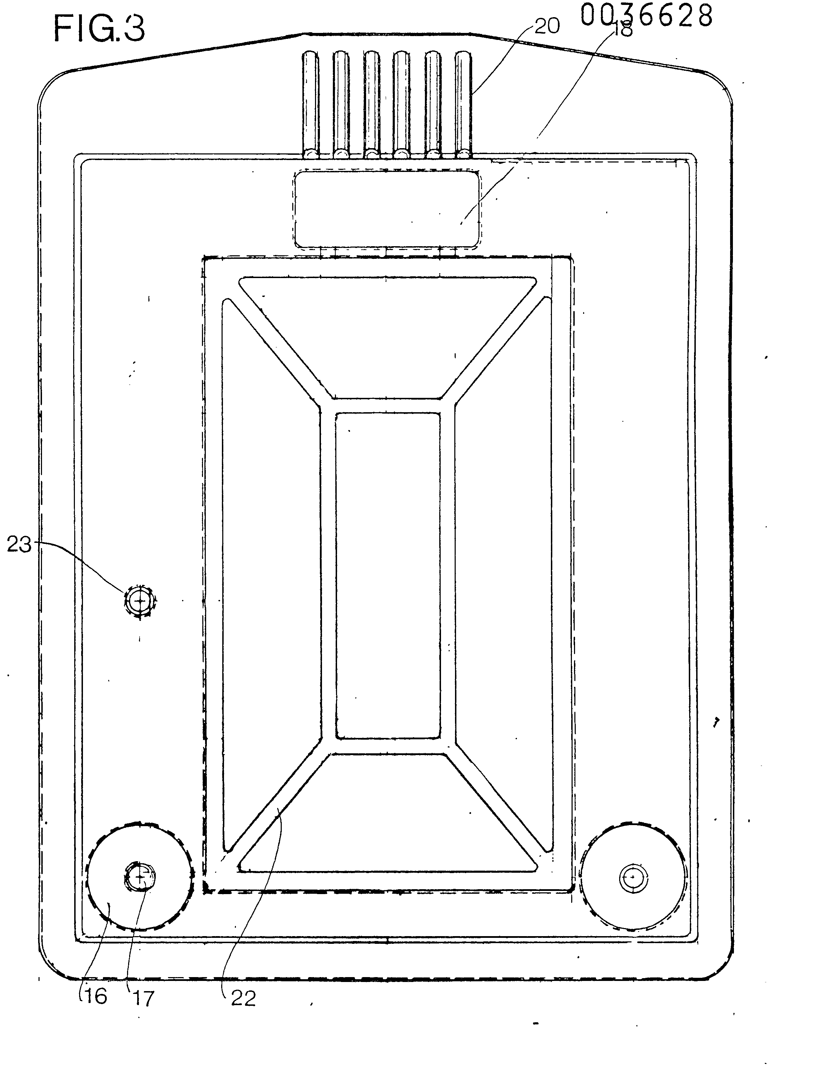

Fig. 3    eine Draufsicht des haubenförmigen Teil der in Fig. 1 und 2 dargestellten Isolationsanordnungen ohne Filterplatte, und

Fig. 4    einen Längsschnitt durch den kragenartigen Teil der in Fig. 1 und 2 dargestellten Isolationsanordnungen.

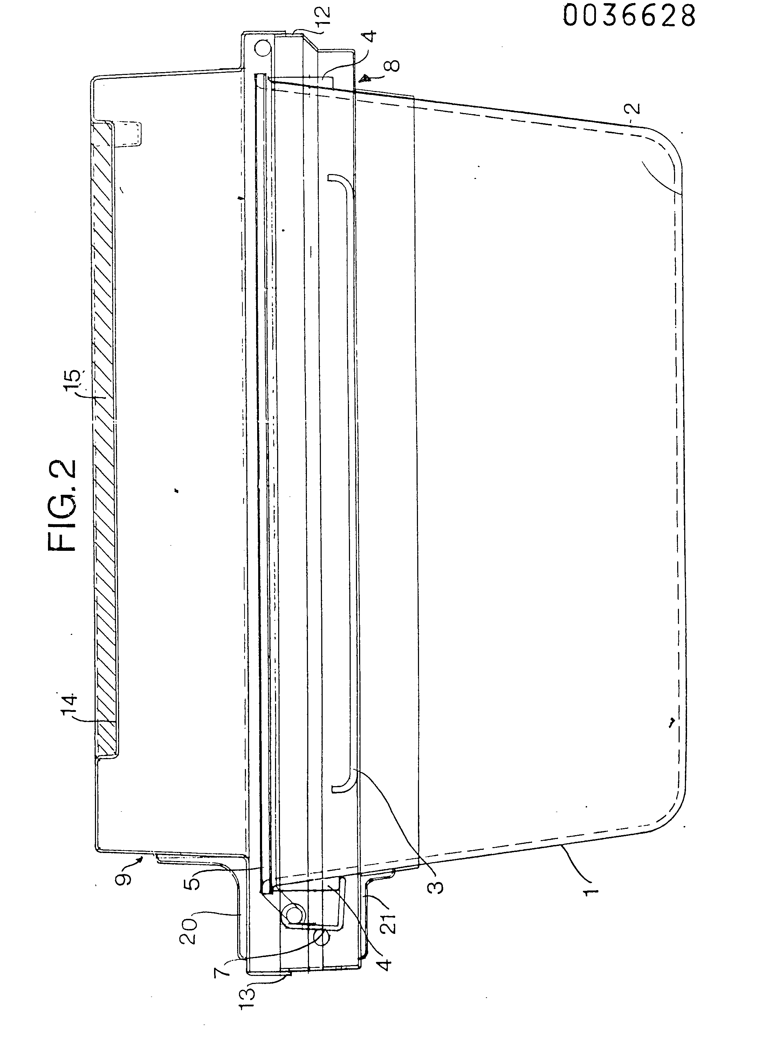

In der Zeichnung bezeichnet 1 einen Käfigkasten mit einem ebenen Boden 2 und nach aussen geneigten Seiten- und Stirnwänden. An der Aussenseite der Seitenwände sind mit verhältnismässig kurzem Abstand vom oberen Rand des Käfigkasten Tragschienen 3 vorgesehen (siehe Fig. 2). Der Käfigkasten 1 weist an der Aussenseite der beiden Stirnwände nahe dem oberen Rand ein paar senkrechte Rippen 4 auf, die zur Verriegelung eines aus verschweissten Metalldrähten 6 bestehenden Deckels 5 dienen. Der Deckel 5 weist am einen Ende ein Verriegelungsorgan 7 auf, welches so ausgebildet ist, dass es unter das untere Ende der Rippen 4 geführt werden kann, um den Deckel 5 mit dem Käfigkasten 1 zu verriegeln.

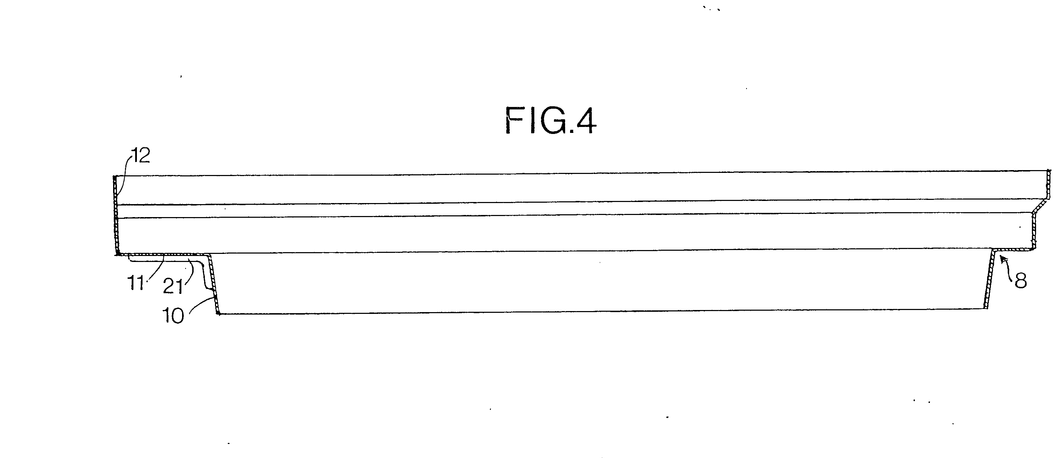

Der Käfig besteht aus einem Käfigkasten 1 und einem Deckel 5 und ist mit Isolationsanordnungen versehen, die aus einem unteren Kragen 8 und einer Haube 9 bestehen. Der in Fig. 4 in Längsschnitt dargestellte Kragen 8 besteht aus einem unteren Teil 10, der die Form eines hohlen Pyramidenstumpfes aufweist, indem die Neigung der Seitenwände im wesentlichen der Neigung der Seitenwände des Käfigkastens 1 entspricht.

Am oberen Rand des unteren Teils 10 ist dieser über einen Verbindungssteg 11 mit einem ringförmigen Flansch 12 verbunden, der sich, wenn der Kragen 8 am Käfigkasten 1 angeordnet ist, bis in den Bereich rings um den oberen Rand des Käfigkastens 1 erstreckt.

Die Haube 9 weist am unteren Ende einen ringförmigen Flansch 13 auf, der in solcher Weise ausgebildet ist, dass er mit dem ringförmigen Flansch 12 des Kragens 8 derart zum Eingriff mit dem ringförmigen Flansch 12 gebracht werden kann, dass der Flansch 13 den Flansch 12 dicht umschliesst.

Die Oberseite der Haube 9 ist im wesentlichen eben und

0036628

weist eine Vertiefung 14 auf, in deren Bereich die Haube 9 durchbrochen ist. In diesem durchbrochenen Bereich sind jedoch Stützstege 22 zur Unterstützung einer Platte 15 aus Filtermaterial vorgesehen. Die Platte 15 ist mit diesem tieferliegenden Teil der Haube 9 verklebt. In der Oberseite der Haube 9 sind ausserdem zwei kreisrunde Vertiefungen 16 mit einer weiteren zentralen Vertiefung 17 ausgebildet. Diese Vertiefungen dienen zur Anordnung von Wasserflaschen auf der Haube, wobei die Wasserabgaberohre der Wasserflaschen unter Durchbrechung des Bodens der zentralen Vertiefung 17 durch die Haube 9 hindurchgeführt werden können.

Eine weitere Vertiefung 23 in der Oberseite kann zur Einführung eines besonderen Luftzufuhrrohres verwendet werden, falls ein solches benötigt wird.

An der Oberseite der Haube 9 ist ausserdem eine Markierungszone 18 zum Aufkleben eines Etiketts vorgesehen. Eine entsprechende Zone 19 ist an der einen Stirnfläche der Haube 9 vorgesehen. Die Haube 9 weist an diesem Ende eine Reihe paralleler Verstärkungsrippen 20 auf. Entsprechende Rippen 21 sind am Kragen 8 ausgebildet.

7                    0036628

Patentansprüche:

1. Anordnungen zur Isolierung des Inneren von Käfigen für kleine Versuchstiere von der Umwelt, wobei die Käfige jeweils einen oben offenen Kasten, z.B. aus durchsichtigem Kunststoff und einen Deckel umfassen, dadurch gekennzeichnet, dass sie aus einem unteren kragenartigen Teil, der in solcher Weise ausgebildet ist, dass er um einen Käfigkasten nach oben zur satten Anlage an der Aussenseite des Käfigkastens in einem Bereich nahe dem oberen Kastenrand geführt werden kann, und einen nach oben gerichteten ringförmigen Flansch aufweist, sowie aus einem oberen haubenförmigen Teil bestehen, der mindestens eine durch eine Platte aus luftfiltrierendem Material abgedeckte Öffnung und einen nach unten gerichteten Flansch aufweist, der zum Eingriff mit dem nach oben gerichteten ringförmigen Flansch des kragenförmigen Teils gebracht werden kann, wenn dieser satt anliegend an einem Käfigkasten angeordnet ist.

2. Anordnungen nach Anspruch 1, dadurch gekennzeichnet, dass der kragenartige Teil aus einem dünnen biegsamen Kunststoffmaterial besteht.

3. Anordnungen nach Anspruch 1, dadurch gekennzeichnet, dass der kragenartige Teil steif ist, und einen an der Innenseite angeordneten Dichtring aufweist.

4. Anordnungen nach Anspruch 1, dadurch gekennzeichnet, dass auf die Innenseite des kragenartigen Teils ein Klebstoff aufgetragen ist.

5. Anordnungen nach Anspruch 1, dadurch gekennzeichnet, dass derjenige Teil des kragenförmigen Teils der zum satten Anliegen an dem Käfigkasten vorgesehen ist, über einen plattenförmigen Verbindungssteg mit dem unteren Rand des nach oben gerichteten ringförmigen Flansches verbunden ist.

6. Anordnungen nach Anspruch 1, dadurch gekennzeichnet, dass der haubenförmige Teil eine im wesentlichen ebene Oberfläche aufweist, und dass in dieser ebenen Oberfläche eine Öffnung ausgebildet ist, die durch eine Filterplatte abgedeckt ist.

7. Anordnungen nach Anspruch 1, dadurch gekennzeichnet, dass in der Öffnung Stützstege für die Filterplatte ausgebildet sind.

8. Anordnungen nach Anspruch 6, dadurch gekenn-

8 0036628

zeichnet, dass in der ebenen Oberfläche der Haube eine oder mehrere kreisrunde Vertiefungen mit einem verhältnismässig leicht durchbrechbaren Boden ausgebildet sind.

## FIG.1

0036628

# FIG. 2

0036628

FIG.3

# FIG.4

12

11  21

10

8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – A – 1 607 073 (BECTON, DICKINSON & CO.) <br> * Seite 4, Zeile 6 bis Seite 5, Zeile 12; Fig. 1, 2 * <br> -- | 1,3,5 |
| | US – A – 3 537 428 (J.R. MONTGOMERY) <br> * Zusammenfassung; Fig. 1 bis 6 * <br> -- | 1,6,8 |
| A | CH – A – 469 433 (BOUQUET & CIE.) <br> -- | |
| A | US – A – 3 528 227 (C.A. LEE et al.) <br> -- | |
| A | DE – U1 – 7 826 135 (WAGNER & KELLER) <br> ---- | |

**KLASSIFIKATION DER ANMELDUNG (Int. Cl.³)**

A 01 K 1/03

**RECHERCHIERTE SACHGEBIETE (Int. Cl.³)**

A 01 K 1/02
A 01 K 1/03
A 01 K 1/035

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | |
|---|---|---|
| **Recherchenort** <br> Berlin | **Abschlußdatum der Recherche** <br> 03-06-1981 | **Prüfer** <br> SCHOFER |